# EUROPÄISCHE PATENTSCHRIFT

(11) **EP 3 183 766 B1**
(45) Veröffentlichungstag und Bekanntmachung des Hinweises auf die Patenterteilung: **03.10.2018**
(21) Anmeldenummer: 15762918.9
(22) Anmeldetag: 21.08.2015
(51) Int. Cl.: H01M 8/04082

(54) **BRENNSTOFFZELLENSYSTEM-REAKTIONSGASBEHÄLTER MIT OPTIMIERTER RAUMAUSNUTZUNG**
STORAGE TANK FOR A FUEL CELL WITH OPTIMISED INNER SPACE
RÉSERVOIR À COMBUSTIBLE POUR PILE À COMBUSTIBLE PRÉSENTANT UNE UTILISATION OPTIMISÉE DE L' ESPACE INTÉRIEUR

(30) Priorität: 22.08.2014 DE 102014112059
(43) Veröffentlichungstag der Anmeldung: 28.06.2017
(73) Patentinhaber: SPower GmbH, 82178 Puchheim (DE)
(72) Erfinder: LIMBRUNNER, Manfred, 82178 Puchheim (DE)
(74) Vertreter: Schmitt-Nilson Schraud Waibel Wohlfrom Patentanwälte Partnerschaft mbB
(86) Internationale Anmeldenummer: PCT/EP2015/001717
(87) Internationale Veröffentlichungsnummer: WO 2016/026578

(56) Entgegenhaltungen:
- US-A1- 2005 183 425
- US-A1- 2006 141 321
- US-A1- 2009 130 503

## Beschreibung

Gegenstand der vorliegenden Erfindung ist ein Reaktionsgasbehälter für ein Brennstoffzellensystem, ein Brennstoffzellensystem mit dem Reaktionsgasbehälter, sowie ein Fahrzeug, wie beispielsweise ein autonomes Unterwasserfahrzeug, mit Brennstoffzellenantrieb und dem Reaktionsgasbehälter. Der Reaktionsgasbehälter hat einen Aufbau, bei dem eine optimierte Raumausnutzung gewährleistet ist. Das Brennstoffzellensystem der vorliegenden Erfindung verwendet Wasserstoff als Brennstoff und Sauerstoff bzw. Luft als Oxidationsmittel.

In Brennstoffzellen wird elektrische Energie aus chemischer Energie erzeugt, in Umkehrung der Wasserelektrolyse. Die Einzelzelle liefert kontinuierlich Strom dadurch, dass die zu oxidierende Substanz (Wasserstoff) und das Oxidationsmittel (Sauerstoff bzw. Luft) kontinuierlich zugeführt und die Oxidationsprodukte kontinuierlich abgeführt werden. Unterschiedliche Typen von Brennstoffzellen, sowie deren Aufbau und Arbeitsweise sind an sich bekannt.

Brennstoffzellen eignen sich zur Erzeugung von Strom für beliebige Verbraucher. Sie liefern die erforderliche Leistung auf umweltfreundliche Weise, zuverlässig und mit einem guten Wirkungsgrad.

Für den Betrieb von Brennstoffzellen ist es erforderlich, dass zumindest eines der Reaktionsgase, Wasserstoff, in einem Vorratsbehälter bereitgestellt wird, d. h. in mobilen Systemen muss dieser Vorratsbehälter mitgeführt werden. Zudem ist es manchmal nicht möglich, Sauerstoff oder Luft aus der Umgebung zu entnehmen, beispielsweise in einem abgeschlossenen System wie einem Unterwasserfahrzeug. Dann muss zusätzlich auch Sauerstoff bzw. Luft mitgeführt werden. Die Bevorratung von Wasserstoff und Sauerstoff bzw. Luft erfordert, bezogen auf die daraus gewinnbare Leistung, einen relativ großen Raum. Der zur Verfügung stehende Raum ist jedoch häufig begrenzt und eigentlich zur Speicherung der für die angestrebte Leistung und Betriebsdauer des Brennstoffzellensystems erforderlichen Menge an Reaktionsgasen nicht ausreichend.

US 2006/141321 A1 und US 2009/130503 A1 beschreiben Behälter mit getrennten Räumen zum Speichern von gasförmigem Wasserstoff und gasförmigen Sauerstoff für ein Brennstoffzellensystem.

US 2005/183425 A1 offenbart einen Tieftemperatur-Drucktank zum Speichern von flüssigem Wasserstoff für ein Brennstoffzellensystem.

Aufgabe der vorliegenden Erfindung ist es daher, die Bevorratung der Brennstoffzellen-Reaktionsgase Wasserstoff und Sauerstoff bzw. Luft zu optimieren, und einen Brennstoffzellen-Reaktionsgasbehälter bereitzustellen, der einen möglichst geringen Raum einnimmt.

Aufgabe der vorliegenden Erfindung ist es auch, ein Brennstoffzellensystem mit räumlich optimierter Reaktionsgasversorgung bereitzustellen, d. h. ein Brennstoffzellensystem, bei dem die zum kontinuierlichen Betrieb der Brennstoffzellen benötigten Reaktionsgase einen möglichst geringen Speicherraum beanspruchen.

Aufgabe der vorliegenden Erfindung ist es außerdem, ein Brennstoffzel- lenbetriebenes Fahrzeug bereitzustellen, in dem die zum Betrieb der Brennstoffzellen erforderlichen Gase raumoptimiert untergebracht sind bzw. untergebracht werden können.

Die Aufgaben werden gelöst durch den Brennstoffzellen-Reaktionsgasbehälter mit den Merkmalen gemäß Anspruch 1, das Brennstoffzellensystem mit den Merkmalen gemäß Anspruch 12 und das Fahrzeug mit den Merkmalen gemäß Anspruch 14. Ausführungsformen der Erfindung sind in den jeweiligen abhängigen Ansprüchen angegeben.

Bei der vorliegenden Erfindung werden als Reaktionsgase Wasserstoff und Sauerstoff verwendet, bevorzugt Wasserstoff und künstliche Luft, wobei die künstliche Luft bevorzugt einen Sauerstoffgehalt von 20 bis 60 Volumen% aufweist. Die künstliche Luft wird vor der Zuführung zu dem Brennstoffzellensystem aus Stickstoff und Sauerstoff in dem gewünschten Verhältnis gemischt. Alternativ kann jedoch auch reiner Sauerstoff als Reaktionsgas verwendet werden Erfindungsgemäß wird zur Bevorratung der Reaktionsgase ein speziell konstruierter Behälter verwendet. Der Behälter ist so ausgelegt, dass Wasserstoff und Sauerstoff in flüssiger Form eingefüllt und gespeichert werden können. Optional kann auch Stickstoff flüssig oder gasförmig in dem Behälter gespeichert werden. In dem Behälter befinden sich die flüssigen Gase jeweils im Gleichgewicht mit ihrem gasförmigen Aggregatzustand. Das Vermischen von Stickstoff und Sauerstoff zur Erzeugung von Luft erfolgt außerhalb des Behälters im gasförmigen Zustand.

Aufgrund der stark unterschiedlichen Dichten von Gasen und Flüssigkeiten ermöglicht die Speicherung von Gasen in flüssiger Form eine enorme Volumeneinsparung gegenüber der Speicherung derselben Gase im gasförmigen Zustand. Allerdings erfordert die Verflüssigung von Wasserstoff, Sauerstoff und Stickstoff, und das Halten dieser Gase im flüssigen Zustand, sehr tiefe Temperaturen, abhängig vom ausgeübten Druck, und oberhalb der kritischen Temperatur eines Gases ist überhaupt keine Verflüssigung mehr möglich, unabhängig davon, wie hoch der ausgeübte Druck ist.

Die relevanten Stoffdaten für Sauerstoff, Stickstoff und Wasserstoff sind in der nachfolgenden Tabelle angegeben.

| Gas | Schmelztemp. (°C) | Siedetemp. (°C) | Dichte Gas (kg/m³) | Dichte flüssig (kg/m³) | Kritischer Druck (MPa) | Kritische Temper. (°C) |
|---|---|---|---|---|---|---|
| Sauerstoff | -218,8 | -182,9 | 1,43 | 1141 | 5,04 | -118,57 |
| Stickstoff | -210,5 | -195,7 | 1,25 | 808,5 | 3,40 | -146,85 |
| Wasserstoff | -259,2 | -252,7 | 0,0899 | 70,79 | 1,29 | -239,91 |

Die angegebene Siedetemperatur und die angegebenen Dichten beziehen sich jeweils auf Normalbedingungen.

Es ist erforderlich, die Reaktionsgase vom Zeitpunkt des Befüllens des Reaktionsgasbehälters bis zum Ende der auszuführenden Mission, d. h. bis zu dem Zeitpunkt, zu dem das Brennstoffzellensystem keine Leistung mehr zu liefern braucht, im flüssigen Zustand zu halten. Eine derartige Mission kann mehrere Stunden, beispielsweise 2 oder 3 oder 4 Stunden oder auch mehrere Tage dauern. Bei entsprechend groß dimensionierten Reaktionsgasbehältern können auch Reaktionsgase für längere Zeiträume, beispielsweise 2 oder 3 Wochen, bevorratet werden. Große Reaktionsgasbehälter haben gegenüber kleineren Reaktionsgasbehältern den Vorteil einer relativ geringeren Abdampfrate.

Eine aktive Kühlung der Reaktionsgase scheidet wegen Platzmangels aus. Außerdem würde sie zusätzlich Energie verbrauchen. Das Beibehalten des flüssigen Zustands über den erforderlichen Zeitraum muss daher durch eine geeignete Isolierung gewährleistet werden, wobei Isolierungen ebenfalls Platz beanspruchen, was nachteilig ist.

Erfindungsgemäß werden nun die unterschiedlichen Siedetemperaturen und kritischen Temperaturen der Reaktionsgase genutzt, um die Reaktionsgase gegenseitig als Isoliermaterialien füreinander zu verwenden. Dies ist durch die erfindungsgemäße spezielle Konstruktion der Reaktionsgasbehälter als ein "Kombinations-Reaktionsgasbehälter" möglich. Dabei werden die einzelnen Vorratsbehälter (Tanks) ineinander "verschachtelt".

Das Gas mit dem niedrigsten Siedepunkt, Wasserstoff, wird stets im innersten Vorratsbehälter (Wasserstofftank) gespeichert. In der einfachsten Ausführungsform der vorliegenden Erfindung wird der Wasserstofftank von einem Behälter umgeben, der zur Aufnahme von Sauerstoff dient (Sauerstofftank), d. h. der Wasserstofftank befindet sich im Inneren des Sauerstofftanks. Zur Aufnahme von Sauerstoff steht das Volumen zur Verfügung, das nicht vom Wasserstofftank eingenommen wird. Der Sauerstofftank wiederum wird von einer Isolierung umgeben.

Die Isolierung kann als ein weiterer Behälter ausgebildet sein, der den Sauerstofftank umgibt, d. h. der Sauerstofftank befindet sich im Inneren des Isolierbehälters. Die isolierende Wirkung wird bevorzugt durch Evakuieren des Isolierbehälters bzw. des nicht vom Sauerstofftank eingenommenen Raums erzielt. Alternativ kann der Isolierbehälter bzw. der nicht vom Sauerstofftank eingenommene Raum auch mit gasförmigem oder flüssigem Stickstoff gefüllt werden. Gemäß einer weiteren Alternative kann die Isolierung durch einen Kältedämmstoff bewirkt werden, der den Sauerstofftank umgibt. In Frage kommen an sich bekannte Kältedämmstoffe wie beispielsweise Polystyrolschäume oder expandierte Korksteinplatten.

Die Speicherung von Stickstoff, der erforderlich ist, wenn das Brennstoffzellensystem mit künstlicher Luft betrieben werden soll, erfolgt entweder in einem separaten Vorratsbehälter, beispielsweise einem üblichen Druckgasbehälter, oder in dem Kombinations-Reaktionsgasbehälter.

Die Speicherung des Stickstoffs in dem Kombinations-Reaktionsgasbehälter ist bevorzugt. Bei dieser Ausführungsform weist der erfindungsgemäße Reaktionsgasbehälter zusätzlich einen Tank für flüssigen Stickstoff innerhalb des Sauerstofftanks auf, und der Wasserstofftank befindet sich innerhalb des Stickstofftanks. Am Außenumfang befindet sich wiederum die Isolierung, beispielsweise in Form eines evakuierten Behälters. Der Reaktionsgasbehälter hat somit einen zwiebelartigen Aufbau: Der Behälter zur Aufnahme von Wasserstoff wird umgeben von einem Behälter zur Aufnahme von Stickstoff, der wiederum von einem Behälter zur Aufnahme von Sauerstoff umgeben wird, der seinerseits von einem evakuierten Behälter umgeben wird.

Bevorzugt wird jeder Tank vollständig von dem jeweils äußeren Tank bzw. der jeweiligen Isolierung umgeben. So befindet sich jeder Tank vollständig innerhalb eines anderen Tanks oder innerhalb einer isolierenden Hülle. Der Begriff "vollständig" ist so zu verstehen, dass Unterbrechungen durch Leitungen zulässig sind, das heißt, durch die äußeren Tanks und Isolierungen können Leitungen zu den inneren Tanks hindurchgeführt werden, beispielsweise Befüllungs/Entnahmeleitungen für Gase und/oder Signalübertragunsleitungen für Sensoren wie Drucksensoren.

Gemäß einer Ausführungsform der vorliegenden Erfindung werden die einzelnen Tanks getrennt hergestellt und zusammengesetzt bzw. verschweißt, wobei naturgemäß nur der Innentank aus einem Stück gefertigt werden kann. Bei dieser Ausführungsform haben die Tanks mit Ausnahme des innersten Tanks jeweils innenliegende und außenliegende Wände, wobei die innenliegenden Wände eines Tanks einen Hohlraum bilden, in dem der nächstinnere Tank untergebracht wird.

Gemäß einer anderen Ausführungsform entstehen die einzelnen Tanks erst im Verlauf des Herstellungsverfahrens des Reaktionsgasbehälters durch Umschließen eines jeweils fertiggestellten Tanks mit einer weiteren Umhüllung, wodurch ein weiterer Tank entsteht. Die Tanks werden somit nach außen hin immer größer, während der zur Aufnahme von Gas zur Verfügung stehende Raum nur der Raum zwischen der Wand des umhüllten Tanks und der Wand des umhüllenden Tanks ist.

Zwischen den Einzeltanks, d. h. dem Wasserstofftank und dem Sauerstofftank oder dem Wasserstofftank, dem Stickstofftank und dem Sauerstofftank, können jeweils weitere Isolierungen vorgesehen werden, beispielsweise in Form evakuierter Behälter.

Die Formgebung des Reaktionsgasbehälters, insbesondere seine Außengestalt, orientiert sich bevorzugt an der Form des Raums in dem Fahrzeug oder sonstigen Gerät, in den der Reaktionsgasbehälter eingebaut werden soll. Der erfindungsgemäße Reaktionsgasbehälter mit optimierter Raumausnutzung wird mit besonderem Vorteil in bemannten oder unbemannten (autonomen) Unterwasserfahrzeugen eingesetzt. Derartige Unterwasserfahrzeuge haben eine langgestreckte Form mit im Wesentlichen rundem Querschnitt ("Zigarrenform"). Der erfindungsgemäße Reaktionsgasbehälter wird dann ebenfalls "zigarrenförmig" ausgebildet, zumindest was seine Außenabmessungen betrifft, und füllt den zur Verfügung stehenden Einbau-Hohlraum bevorzugt optimal aus.

Die Form der inneren Tanks ist prinzipiell beliebig, solange die Tanks ineinander passen, jeder Tank genügend Raum zur Aufnahme des vorgesehenen Gases bietet und ausreichend isoliert wird. Typischerweise haben die Einzeltanks von außen betrachtet im Wesentlichen dieselbe geometrische Gestalt (abgesehen von der Größe), d. h. die Gestalt eines jeden Behälters ist typischerweise eine im Wesentlichen maßstäbliche Vergrößerung der Gestalt des jeweils innenliegenden Behälters.

Bevorzugt sind konzentrische Behälter mit einfachen geometrischen Formen, beispielsweise Kugeln, Zylinder, Rotationsellipsiode, und abgeflachte Kugeln, Zylinder oder Rotationsellipsoide. Gerundete Formen sind grundsätzlich bevorzugt, aber auch eckige Formen sind möglich, beispielsweise Tanks mit viereckigem oder sechseckigem Querschnitt.

Die Abmessungen des erfindungsgemäßen Reaktionsgasbehälters hängen natürlich ab von der Menge an Reaktionsgasen, die in dem Behälter aufgenommen werden sollen, aber auch von der geometrischen Gestalt, die durch den Raum vorgegeben wird, in den der Reaktionsgasbehälter eingebaut werden soll. Als Beispiel zur Orientierung sei ein Reaktionsgasbehälter für ein autonomes Unterwasserfahrzeug genannt, der etwa 12 kg Wasserstoff, etwa 6 kg Sauerstoff und bis zu etwa 1 kg Stickstoff aufnehmen soll, um etwa 250 kWh zu erzeugen. Ein derartiger Reaktionsgasbehälter würde "zigarrenförmig" ausgebildet werden mit einer Länge von etwa 180 bis 200 cm und einem Durchmesser von etwa 40 bis 44 cm (Außenabmessungen). Die erforderliche Stickstoffmenge ist gering, da Stickstoff bevorzugt recycelt wird. Bei einem Betreiben der Brennstoffzellen mit reinem Sauerstoff erübrigt sich das Vorsehen eines Stickstofftanks.

Der Reaktionsgasbehälter wird bevorzugt so dimensioniert, dass er einen Druck von 30 MPa (ohne Absicherung gegenüber Überschreiten der kritischen Gasdrücke) aushalten kann. Dies entspricht dem Befülldruck von gasförmigem Stickstoff. Die Isolierung wird bevorzugt so gewählt, dass der thermische Eintrag aus der Umgebung nie zu einem Überschreiten der kritischen Gasdrücke führt, was sichergestellt ist, wenn die kritischen Temperaturen für Sauerstoff, Stickstoff und Wasserstoff jeweils nicht überschritten werden. Außerdem werden während des Betriebs der Brennstoffzellen kontinuierlich Reaktionsgase im gasförmigen Zustand aus dem Reaktionsgasbehälter entnommen, wodurch der Druckanstieg in dem Reaktionsgasbehälter zusätzlich kontrolliert bzw. verhindert wird. Ferner werden bevorzugt Absicherungselemente wie Überdruckventile vorgesehen für den Fall, dass aus irgendeinem Grund doch der kritische Druck eines Gases überschritten werden sollte. Die Absicherung erfolgt typischerweise mit einer Sicherheitsmarge von 20-40% Abstand zum kritischen Druck, d.h. für Wasserstoff bei etwa 0,8 MPa. Derart abgesicherte Tanks brauchen nur für entsprechend geringere Drücke ausgelegt zu werden.

Wie oben angegeben, sind in einer Ausführungsform des erfindungsgemäßen Reaktionsgasbehälters lediglich ein Wasserstofftank und ein den Wasserstofftank umgebender Sauerstofftank vorgesehen, wobei der Sauerstofftank von einer Isolierung umgeben wird. Stickstoff wird separat gespeichert. Bevorzugt ist es jedoch, zwischen dem Wasserstofftank und dem Sauerstofftank einen Stickstofftank vorzusehen. Stickstoff erfüllt hier in vorteilhafter Weise die Funktion eines Sperrgases, d. h. eventuelle Leckagen von Wasserstoff und/oder Sauerstoff würden zuerst in den Stickstofftank gelangen, bevor sie mit dem jeweiligen anderen Gas zusammentreffen können und eine Gefahrensituation entstehen kann. Der Stickstofftank kann zusätzlich druckbeaufschlagt werden, so dass eine eventuelle Leckage dazu führt, dass nicht Wasserstoff oder Sauerstoff in den Stickstofftank gelangt, sondern vielmehr Stickstoff in den Wasserstofftank oder den Sauerstofftank gelangt. Dieser Fehlerfall kann durch eine Drucküberwachung, d. h. durch Vorsehen von Drucksensoren in den entsprechenden Tanks, detektiert werden.

Bei Speicherung von Stickstoff in Gasform wird der Stickstofftank natürlich nicht beim kritischen Druck abgesichert.

Gemäß einer besonders bevorzugten Ausführungsform wird der erfindungsgemäße Reaktionsgasbehälter selbsttragend ausgeführt. Um eine selbsttragende Konstruktion zu gewährleisten, werden in den Innenräumen der Behälter bevorzugt Aussteifungen vorgesehen, beispielsweise Wabenstrukturen. Dies kann insbesondere bei größeren Behältern erforderlich sein, während kleine Behälter auch ohne Aussteifungen selbsttragend konstruiert werden können.

Durch die erfindungsgemäße Anordnung der Reaktionsgastanks ineinander, wobei der zur Aufnahme des Gases mit der niedrigsten Siedetemperatur ausgelegte Tank der innerste Tank ist und der zur Aufnahme des Gases mit der höchsten Siedetemperatur ausgelegte Tank der äußerste Tank ist, erfolgt eine schrittweise Isolierung der Gase Wasserstoff und Sauerstoff bzw. Wasserstoff, Stickstoff und Sauerstoff von innen nach außen zur Umgebungstemperatur. Dies hat neben der optimalen Platzausnutzung den zusätzlichen Vorteil, dass keine aufwendigen Aufhängungen zwischen den verschiedenen Reaktionsgasbehältern ausgeführt werden müssen, um den Wärmeeintrag zu minimieren.

Zur Befüllung des Reaktionsgasbehälters mit Reaktionsgasen bzw. zur Entnahme der Reaktionsgase aus dem Reaktionsgasbehälter sind Leitungen vorgesehen, wobei die Leitungen aus den Innentanks durch die sie umgebenden Außentanks hindurchgeführt werden müssen. Bevorzugt sind auch die Befüllungs/Entnahme-Leitungen zumindest teilweise ineinander angeordnet.

Der erfindungsgemäße Reaktionsgasbehälter wird unmittelbar vor einer beabsichtigten Inbetriebnahme der zu versorgenden Brennstoffzellen mit Reaktionsgasen befüllt. Der Wasserstofftank wird mit flüssigem Wasserstoff befüllt, und der Sauerstofftank wird mit flüssigem Sauerstoff befüllt. Der Stickstofftank kann mit flüssigem oder gasförmigem Stickstoff befüllt werden, wobei eine Befüllung mit flüssigem Stickstoff zu bevorzugen ist. Gasförmiger Stickstoff (Befüllungsdruck ca. 30 MPa) verflüssigt sich durch die Temperaturen der Gase in den Nachbartanks zumindest teilweise, wobei die flüssigen Gase in den Nachbartanks unnötig erwärmt werden. Unmittelbar nach dem Befüllen des Reaktionsgasbehälters wird das Brennstoffzellensystem in Betrieb genommen. Zum Betreiben der Brennstoffzellen wird kontinuierlich gasförmiger Wasserstoff aus dem Wasserstofftank entnommen und den Anoden zugeführt. Gleichzeitig wird kontinuierlich gasförmiger Sauerstoff aus dem Sauerstofftank sowie gasförmiger Stickstoff aus dem Stickstofftank entnommen und durch Vermischen von Sauerstoff und Stickstoff außerhalb des Reaktionsgasbehälters künstliche Luft mit einem Sauerstoffanteil von bevorzugt 20 bis 60 Volumen% erzeugt und den Kathoden zugeführt. Alternativ kann den Kathoden auch reiner Sauerstoff zugeführt werden. Ein Stickstofftank ist dann nicht erforderlich. Flüssige und gasförmige Aggregatzustände befinden sich in den Tanks jeweils im Gleichgewicht. Durch die gegenseitige Isolierung der Reaktionsgase und ihre kontinuierliche Entnahme aus den Tanks ist gewährleistet, dass die Gase in den Tanks flüssig gehalten werden, aber stets ausreichend Gas, d. h. gasförmiges Material, zum Betreiben der Brennstoffzellen zur Verfügung steht, ohne jedoch den Absicherungsdruck eines jeden Reaktionsgasbehälters zu überschreiten. Abgesichert wird für jedes Gas bevorzugt ein Überdruck von etwa 20-40% unterhalb des kritischen Drucks des jeweiligen Gases.

Gemäß einer bevorzugten Ausführungsform wird der erfindungsgemäße Reaktionsbehälter in eine Vorrichtung wie einen Wechselrahmen montiert, so dass eine Befüllung außerhalb des Fahrzeug s bzw. ein problemloses Auswechseln von Reaktionsbehältern möglich ist.

Die Erfindung wird nachfolgend anhand von Figuren noch weiter veranschaulicht. Es wird darauf hingewiesen, dass die Figuren nicht maßstabsgetreu und nicht proportionsgetreu sind. Außerdem sind jeweils nur die zum Verständnis der vorliegenden Erfindung wesentlichen Merkmale dargestellt. Es versteht sich, dass zusätzliche Merkmale vorhanden sein können bzw. dass die dargestellten Merkmale auch in anderen Kombinationen als in einer speziellen Figur dargestellt zur Anwendung kommen können. Gleiche Bezugsziffern bezeichnen jeweils gleiche oder entsprechende Elemente. Es zeigen:
- Fig. 1: eine sehr schematische Darstellung eines erfindungsgemäßen Brennstoffzellensystems,
- Fig. 2A, 2B, 3, 4, 5, 6: jeweils schematische Darstellungen, im Schnitt entlang der Linie A-A' in Fig. 1, verschiedener Ausführungsformen erfindungsgemäßer Reaktionsgasbehälter,
- Fig. 7A: eine schematische Darstellung, im Schnitt, einer Ausführungsform eines erfindungsgemäßen Reaktionsgasbehälters mit Zuführ/Entnahmeleitungen für Reaktionsgase,
- Fig. 7B: eine schematische Darstellung, im Schnitt entlang der Linie B-B' in Fig. 7A, der Zuführ/Entnahmeleitung,
- Fig. 7C: eine schematische Darstellung, im Schnitt entlang der Linie C-C' in Fig. 7A, der Zuführ/Entnahmeleitung,
- Fig. 8: eine schematische Darstellung einer alternativen Ausführungsform eines erfindungsgemäßen Reaktionsgasbehälters mit Zuführ/Entnahmeleitungen für Reaktionsgase, und
- Fig. 9: eine schematische Darstellung einer Verzweigungsleitung zur Zuführung/Entnahme von Reaktionsgasen.

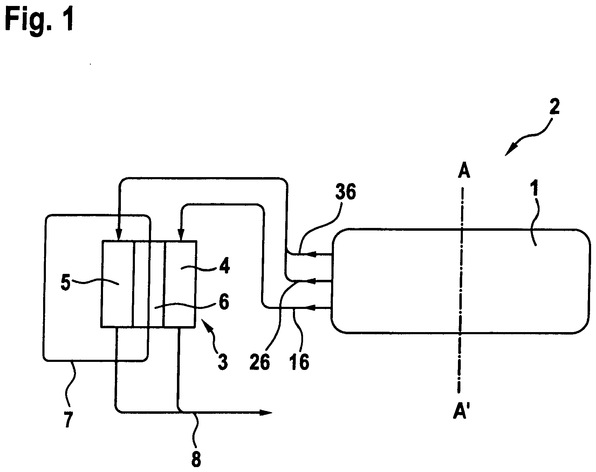

Ein erfindungsgemäßes Brennstoffzellensystem 2 ist schematisch in Fig. 1 dargestellt. Das Brennstoffzellensystem 2 weist als wesentliche Bestandteile eine Brennstoffzelle 3 und einen erfindungsgemäßen Reaktionsgasbehälter 1 auf. Ein Brennstoffzellensystem weist natürlich nicht nur eine einzige Brennstoffzelle, sondern einen Brennstoffzellenstapel oder mehrere Brennstoffzellenstapel auf. Aus Gründen der einfachen Darstellbarkeit ist jedoch nur eine einzige Brennstoffzelle gezeigt. Im Betrieb des Brennstoffzellensystems 2 wird gasförmiger Wasserstoff aus dem Reaktionsgasbehälter 1 über eine Leitung 16 der Anode 4 zugeführt, während gasförmiger Stickstoff und gasförmiger Sauerstoff aus dem Reaktionsbehälter 1 über Leitungen 26 bzw. 36 entnommen, miteinander vermischt und über eine gemeinsame Leitung der Kathode 5 zugeführt werden. Die Brennstoffzelle (bzw. der Brennstoffzellenstapel) 3 verfügt auch über ein Kühlsystem, schematisch dargestellt durch die Kühlplatte 6 und den Kühlkreislauf 7, der übliche Peripherieelemente (nicht gezeigt) wie beispielsweise einen Wärmetauscher und einen Separatortank aufweist. Abgase und überschüssiges Wasser werden über eine Leitung 8 abgeführt, die zu einer (nicht gezeigten) Abgasbehandlungsanlage führt. Abgase und Abwasser müssen gesammelt, ggf. separiert, komprimiert und bis zum Ende der Mission zwischengelagert werden. Auch ein teilweises Recyceln ist möglich.

In den folgenden Figuren sind verschiedene Ausführungsformen des Innenaufbaus des Reaktionsgasbehälters 1, im Schnitt entlang der Linie A-A' in Fig. 1, dargestellt.

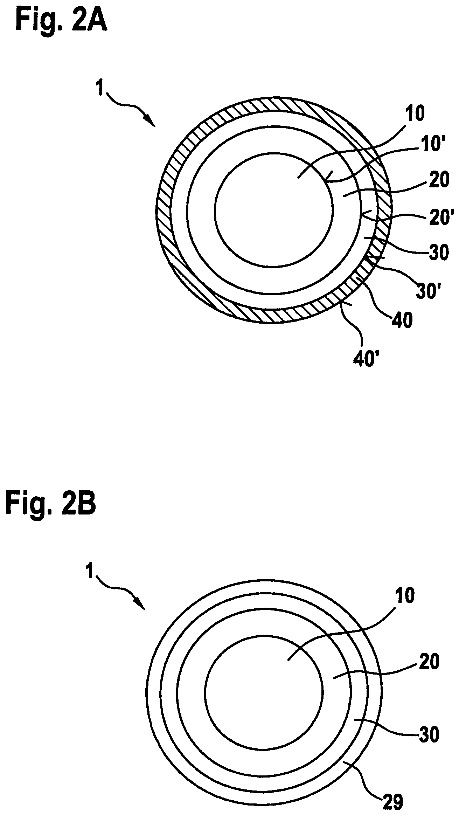

Bei der in Fig. 2A dargestellten Ausführungsform des Reaktionsgasbehälters 1 ist der Wasserstofftank 10 ein länglicher Behälter mit rundem Querschnitt, der zur Befüllung mit und Speicherung von flüssigem Wasserstoff geeignet ist. Der Wasserstofftank 10 besteht beispielsweise aus Metall und hat eine Wand 10'. Der Wasserstofftank 10 befindet sich im Inneren des Stickstofftanks 20. Der Stickstofftank 20 hat eine Außenwand 20', beispielsweise aus Metall, und ist zur Befüllung mit flüssigem oder gasförmigem Stickstoff geeignet. Der Raum zur Speicherung von Stickstoff ist der zwischen den Wänden 10' und 20' gebildete Zwischenraum. Der Stickstofftank 20 befindet sich im Inneren des Sauerstofftanks 30. Der Sauerstofftank 30 hat eine Wand 30', beispielsweise aus Metall, und ist wie der Wasserstofftank 10 und der Stickstofftank 20 ein länglicher Behälter mit rundem Querschnitt. Er ist zur Befüllung mit und Speicherung von flüssigem Sauerstoff geeignet. Der Raum zur Aufnahme des Sauerstoffs ist der Zwischenraum zwischen der Wand 20' des Stickstoffbehälters 20 und der Wand 30' des Sauerstoffbehälters 30. Der Sauerstofftank 30 befindet sich in einem weiteren Behälter 40, beispielsweise aus Metall, der eine Wand 40' besitzt. Der Behälter 40 ist länglich mit rundem Querschnitt und kann evakuiert werden, so dass er eine Isolierung für die Behälter 10, 20, 30 bildet.

In der in Fig. 2A dargestellten Ausführungsform sind die Behälter 10, 20, 30, 40 konzentrisch angeordnet. Zwischen den Wänden 10' und 20', den Wänden 20' und 30', und den Wänden 30' und 40' befinden sich jeweils Abstandhalter/Fixierungen, die in der Figur nicht dargestellt sind. Ebenfalls nicht dargestellt sind Drucksensoren in den Tanks 10 und 30, die anzeigen, falls in einer der Wände 10', 20' ein Leck auftreten sollte und Stickstoff in den Tank 10 oder den Tank 30 überströmt, sowie Absicherungselemente für ein eventuelles Ansteigen des Drucks in den Bereich des kritischen Drucks.

Durch die Anordnung der Gase in der dargestellten Weise, bei der das Gas mit der niedrigsten Siedetemperatur und der niedrigsten kritischen Temperatur im innersten Behälter gespeichert wird, während das Gas mit der höchsten Siedetemperatur und der höchsten kritischen Temperatur im äußersten Behälter gespeichert wird, wird eine langsame und gleichmäßige Erwärmung aller gespeicherten Gase, und damit eine kontinuierliche Entnehmbarkeit der Gase, sichergestellt.

Fig. 2B zeigt eine Ausführungsform des Reaktionsgasbehälters 1, die der in Fig. 2A dargestellten Ausführungsform entspricht mit der Ausnahme, dass der Vakuumbehälter 40 hier durch einen weiteren Stickstofftank 29 ersetzt ist, der mit flüssigem oder gasförmigem Stickstoff befüllt werden kann. Als weitere Alternative für eine isolierende Ummantelung können auch an sich bekannte Dämmstoffe verwendet werden.

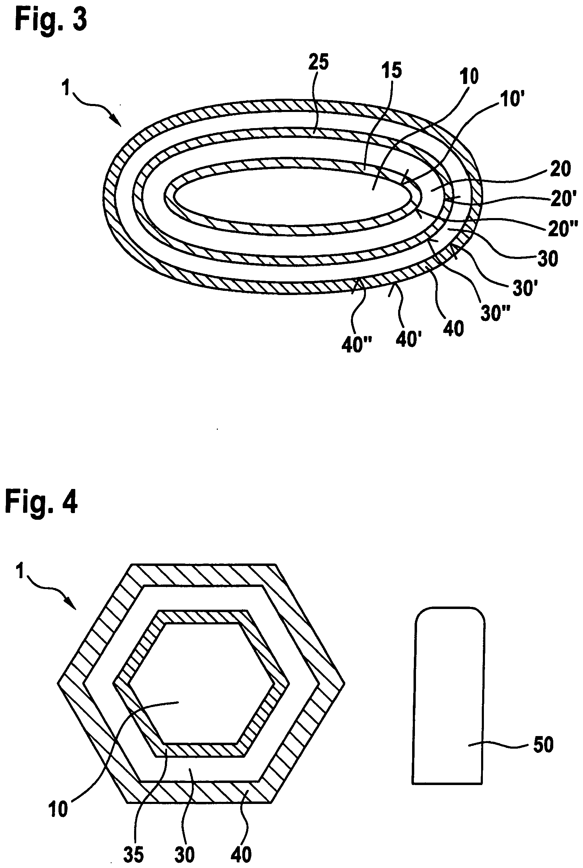

Die in Fig. 3 dargestellte Ausführungsform des Reaktionsgasbehälters 1 weist einen elliptischen Querschnitt auf. Im Unterschied zu den in den Fig. 2A und 2B dargestellten Ausführungsformen sind der Wasserstofftank 10, der Stickstofftank 20 und der Sauerstofftank 30 hier völlig unabhängig voneinander, d. h. die einzelnen Tanks sind physisch voneinander getrennt. Der Stickstofftank 20 besitzt eine Außenwand 20' und eine Innenwand 20", und der Sauerstofftank 30 besitzt eine Außenwand 30' und eine Innenwand 30". Der Stickstofftank 20 befindet sich in dem von der Innenwand 30" des Sauerstofftanks 30 gebildeten Hohlraum, und der Wasserstofftank 10 befindet sich in dem von der Innenwand 20" des Stickstofftanks 20 gebildeten Hohlraum. Die Zwischenräume zwischen der Außenwand 10' des Wasserstofftanks 10 und der Innenwand 20" des Stickstofftanks 20, sowie zwischen der Außenwand 20' des Stickstofftanks 20 und der Innenwand 30" des Sauerstofftanks 30 sind zur besseren Isolierung evakuierbar, d. h. sie bilden Isolierungen 15, 25. Ein weiterer evakuierbarer Raum 40 bildet die Außenisolierung, wie in Fig. 2A.

Alternativ zu runden oder gerundeten Querschnitten kann der Reaktionsgasbehälter 1 auch einen eckigen Querschnitt aufweisen. Eine derartige Ausführungsform ist in Fig. 4 dargestellt, wobei der Reaktionsgasbehälter 1 hier sechseckig ausgebildet ist. Die in Fig. 4 dargestellte Ausführungsform unterscheidet sich von der in den vorangehenden Figuren dargestellten Ausführungsformen auch dadurch, dass sie keinen Stickstofftank, sondern lediglich einen Wasserstofftank 10 und einen Sauerstofftank 30 aufweist, während zur Speicherung von Stickstoff ein separater Druckgasbehälter 50 vorgesehen ist. Der Raum bzw. der Behälter 35 zwischen dem Wasserstofftank 10 und dem Sauerstofftank 30, sowie der Raum bzw. der Behälter 40, der den Sauerstofftank 30 umgibt, ist zur Ausbildung von Isolierungen evakuierbar. Alternativ kann die Isolierung 35 und/oder die Isolierung 40 von Dämmstoffen gebildet werden.

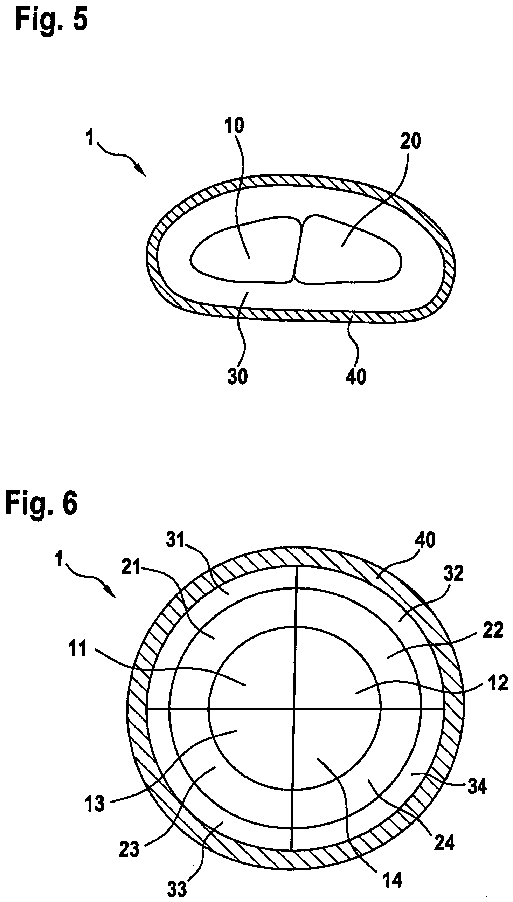

Gemäß einer weiteren Ausführungsform des erfindungsgemäßen Reaktionsgasbehälters 1 sind die Einzeltanks 10, 20, 30 von unterschiedlicher geometrischer Gestalt und nicht konzentrisch ineinander angeordnet. Eine derartige Ausführungsform ist in Fig. 5 dargestellt. Bei dieser Ausführungsform befinden sich der Wasserstofftank 10 und der Stickstofftank 20 nebeneinander und werden gemeinsam von dem Sauerstofftank 30 umgeben.

Um bei Lageveränderungen des Reaktionsgasbehälters 1 eine gleichmäßige Entnehmbarkeit der Reaktionsgase sicherzustellen, können die Einzeltanks in mehrere Segmente unterteilt werden. Eine derartige Ausführungsform ist in Fig. 6 dargestellt. Die in Fig. 6 dargestellte Ausführungsform des Reaktionsgasbehälters 1 unterscheidet sich von der in Fig. 2A dargestellten Ausführungsform dadurch, dass der Wasserstofftank 10, der Stickstofftank 20 und der Sauerstofftank 30 jeweils in acht Sektionen unterteilt sind, aus denen jeweils getrennt Wasserstoff bzw. Stickstoff bzw. Sauerstoff entnommen werden kann. Die Sektionen 11, 12, 13, 14 des Wasserstofftanks befinden sich vor der Zeichenebene, und identische Sektionen 11', 12', 13', 14' befinden sich hinter der Zeichenebene. Die Sektionen 21, 22, 23, 24 des Stickstofftanks befinden sich vor der Zeichenebene, und identische Sektionen 21', 22', 23', 24' befinden sich hinter der Zeichenebene. Die Sektionen 31, 32, 33, 34 des Sauerstofftanks befinden sich vor der Zeichenebene, und identische Sektionen 31', 32', 33', 34' befinden sich hinter der Zeichenebene.

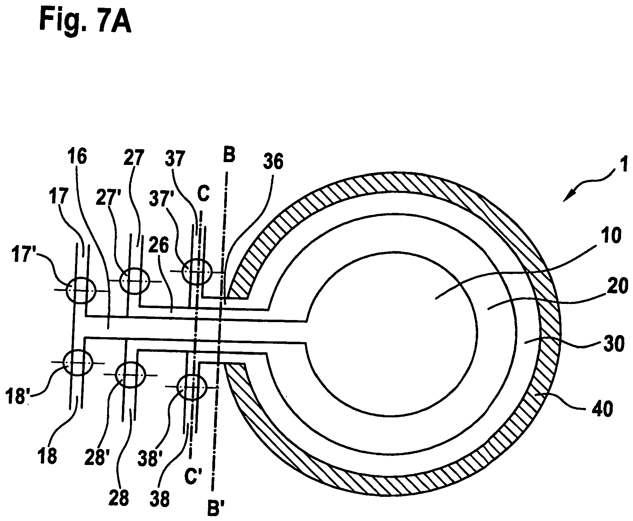

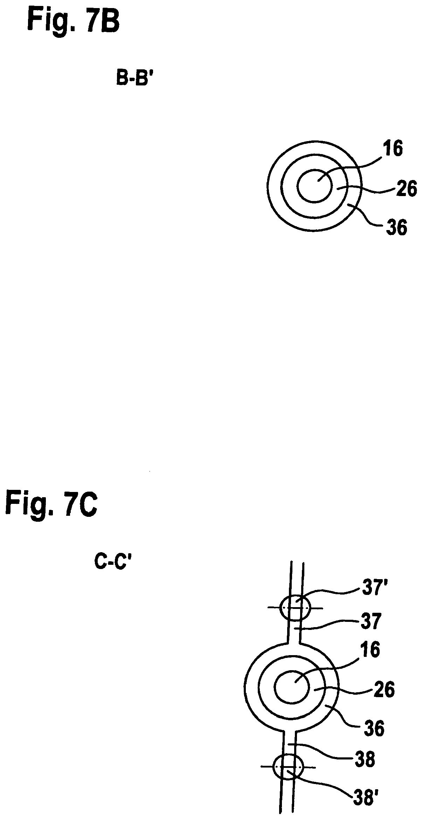

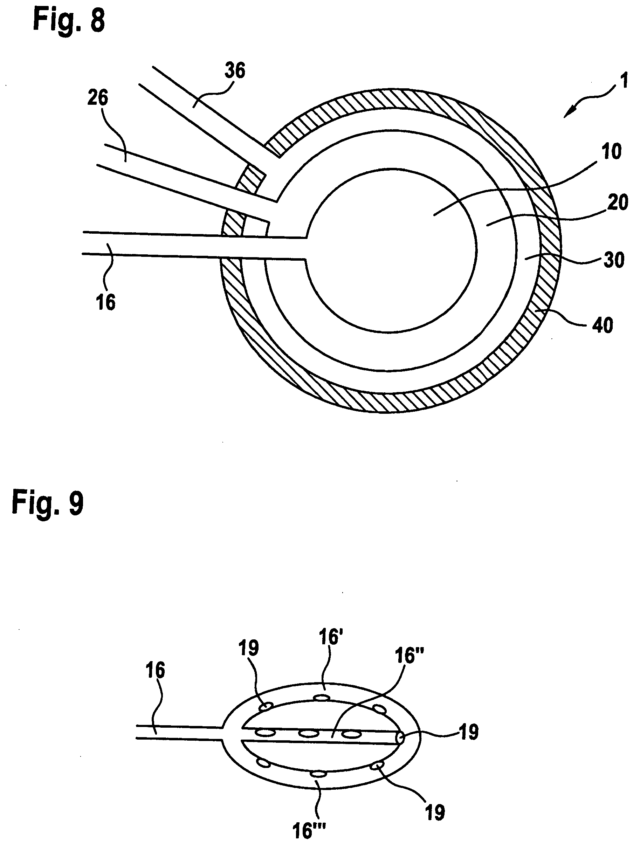

Die Fig. 7 und 8 zeigen Ausführungsformen von Befüllungs/Entnahmeleitungen zum Befüllen der Tanks mit Wasserstoff, Stickstoff und Sauerstoff. Bei der in Fig. 7A dargestellten Ausführungsform des Reaktionsgasbehälters 1 weist der Wasserstoffbehälter 10 eine Leitung 16 auf, über die er mit Wasserstoff befüllt, bzw. durch die Wasserstoff entnommen wird. Das Befüllen erfolgt über die Leitung 17 mit Ventil 17', und die Entnahme erfolgt über die Leitung 18 mit dem Ventil 18'. Der Stickstoffbehälter 20 weist eine Leitung 26 auf, über die er mit Stickstoff befüllt bzw. durch die Stickstoff entnommen wird. Das Befüllen erfolgt über die Leitung 27 mit Ventil 27', und die Entnahme erfolgt über die Leitung 28 mit dem Ventil 28'. Der Sauerstofftank 30 weist eine Leitung 36 auf, über die er mit Sauerstoff befüllt bzw. durch die Sauerstoff entnommen wird. Das Befüllen erfolgt über die Leitung 37 mit dem Ventil 37', und die Entnahme erfolgt über die Leitung 38 mit dem Ventil 38'.

Die Leitung 16, 26, 36 sind in gleicher Weise wie die Tanks 10, 20, 30 konzentrisch ineinander angeordnet, wie aus den Fig. 7B und 7C ersichtlich ist. Fig. 7B zeigt einen Schnitt entlang der Linie B-B' in Fig. 7A, und Fig. 7C zeigt einen Schnitt entlang der Linie C-C' in Fig. 7A.

Bei der in Fig. 8 dargestellten Ausführungsform werden die Leitungen 16, 26, 36 getrennt voneinander aus den Tanks 10, 20, 30 nach außen geführt.

In Fig. 9 ist am Beispiel der Leitung 16 schematisch dargestellt, wie Wasserstoff (und analog Sauerstoff und Stickstoff) stabil und kontinuierlich aus den Tanks 10, 20, 30 entnommen werden können. Die Leitung 16 ist mit Verzweigungsleitungen 16', 16", 16'" ausgebildet, die jeweils Öffnungen 19 zur Entnahme des Reaktionsgases aufweisen.

## Patentansprüche

1. Brennstoffzellensystem-Reaktionsgasbehälter (1) aufweisend
einen Wasserstofftank (10) zur Aufnahme von flüssigem Wasserstoff, einen Sauerstofftank (30) zur Aufnahme von flüssigem Sauerstoff, und
optional, einen Stickstoff tank (20, 29) zur Aufnahme von flüssigem oder gasförmigem Stickstoff,
**dadurch gekennzeichnet, dass** sich der Wasserstofftank (10) mindestens teilweise innerhalb des Sauerstofftanks (30) befindet, und dass der Sauerstofftank (30) mindestens teilweise von einer Isolierung (40) umgeben ist.

2. Brennstoffzellensystem-Reaktionsgasbehälter (1) nach Anspruch 1, der einen Stickstofftank (20) aufweist, wobei sich der Stickstofftank (20) innerhalb des Sauerstofftanks (30) und außerhalb des Wasserstofftanks (10) befindet.

3. Brennstoffzellensystem-Reaktionsgasbehälter (1) nach Anspruch 1 oder 2, der einen Stickstofftank (20) aufweist, wobei sich der Wasserstofftank (10) innerhalb des Stickstofftanks (20) befindet.

4. Brennstoffzellensystem-Reaktionsgasbehälter (1) nach einem der Ansprüche 1 bis 3, bei dem die Isolierung (40) als evakuierter oder evakuierbarer Hohlraum ausgebildet ist.

5. Brennstoffzellensystem-Reaktionsgasbehälter (1) nach einem der Ansprüche 1 bis 4, bei dem der Wasserstofftank (10), der Sauerstofftank (30), und ggf. der Stickstofftank (20, 29) als konzentrische Behälter von unterschiedlicher Größe, aber von im Wesentlichen gleicher geometrischer Gestalt ausgebildet sind.

6. Brennstoffzellensystem-Reaktionsgasbehälter (1) nach einem der Ansprüche 1 bis 4, bei dem der Wasserstofftank (10) und der Sauerstofftank (30) und ggf. der Wasserstofftank (10) und der Stickstofftank (20, 29) als konzentrische Behälter von unterschiedlicher Größe und unterschiedlicher geometrischer Gestalt ausgebildet sind.

7. Brennstoffzellensystem-Reaktionsgasbehälter (1) nach einem der Ansprüche 1 bis 6, bei dem der Wasserstofftank (10) und/oder der Sauerstofftank (30) und/oder der Stickstofftank (20, 29) und/oder die Isolierung (40) mit Aussteifungen ausgestattet ist.

8. Brennstoffzellensystem-Reaktionsgasbehälter (1) nach einem der Ansprüche 1 bis 7, bei dem der Stickstofftank (20) druckbeaufschlagbar ist, und der Wasserstofftank (10) und/oder der Sauerstofftank (30) mit einem Drucksensor ausgestattet ist.

9. Brennstoffzellensystem-Reaktionsgasbehälter (1) nach einem der Ansprüche 1 bis 8, wobei der Behälter die Gestalt eines Rotationsellipsoids aufweist, insbesondere wobei der Behälter eine Länge von 150 bis 250 cm und einen Durchmesser von 35 bis 45 cm aufweist, der Wasserstofftank (20) zur Aufnahme von 10 bis 14 kg flüssigem Wasserstoff ausgelegt ist, der Sauerstoff tank (30) zur Aufnahme von 5 bis 7 kg flüssigem Sauerstoff ausgelegt ist, und optional ein Stickstoff tank (20, 29) zur Aufnahme von bis zu 1 kg flüssigem oder gasförmigem Stickstoff vorgesehen ist.

10. Brennstoffzellensystem-Reaktionsgasbehälter (1) nach einem der Ansprüche 1 bis 9, bei dem der Wasserstofftank (10) und/oder der Sauerstofftank (30) und/oder ggf. der Stickstofftank (20, 29) in zwei oder mehr Segmente unterteilt ist.

11. Brennstoffzellensystem-Reaktionsgasbehälter (1) nach einem der Ansprüche 1 bis 10, bei dem der Wasserstofftank (10), der Sauer- stofftank (30) und ggf. der Stickstofftank (20, 29) Leitungen zum Befüllen mit und Entnehmen von Gas aufweisen, die konzentrisch ineinander angeordnet sind.

12. Brennstoffzellensystem (2) aufweisend mindestens eine Brennstoffzelle (3) mit einer Anode (4) und einer Kathode (5), und einen Reaktionsgasbehälter, **dadurch gekennzeichnet, dass** der Reaktionsgasbehälter ein Reaktionsgasbehälter (1) nach einem der Ansprüche 1 bis 11 ist.

13. Brennstoffzellensystem (2) nach Anspruch 12, bei dem der Stickstofftank als separater Druckgastank (50) ausgebildet ist.

14. Fahrzeug, wie bemanntes oder unbemanntes Unterwasserfahrzeug, mit Brennstoffzellenantrieb, **dadurch gekennzeichnet, dass** es ein Brennstoffzellensystem (2) nach Anspruch 12 oder 13 aufweist.

15. Fahrzeug nach Anspruch 14, **dadurch gekennzeichnet, dass** die Aussengestalt des Reaktionsgasbehälters (1) an die Form des zum Einbau des Reaktionsgasbehälters vorgesehenen Raums in dem Fahrzeug angepasst ist.

## Claims

1. A fuel cell system reaction gas container (1) comprising
a hydrogen tank (10) for receiving liquid hydrogen, an oxygen tank (30) for receiving liquid oxygen, and optionally, a nitrogen tank (20, 29) for receiving liquid or gaseous nitrogen,
**characterised in that** the hydrogen tank (10) is located at least partially within the oxygen tank (30), and that the oxygen tank (30) is at least partially surrounded by an insulation (40).

2. The fuel cell system reaction gas container (1) according to claim 1,
comprising a nitrogen tank (20), the nitrogen tank (20) being located inside the oxygen tank (30) and outside the hydrogen tank (10).

3. The fuel cell system reaction gas container (1) according to claim 1 or 2,
comprising a nitrogen tank (20), the hydrogen tank (10) being located inside the nitrogen tank (20).

4. The fuel cell system reaction gas container (1) according to any of claims 1 to 3,
wherein the insulation (40) is formed as an evacuated cavity or a cavity permitting evacuation.

5. The fuel cell system reaction gas container (1) according to any of claims 1 to 4,
wherein the hydrogen tank (10), the oxygen tank (30) and, if applicable, the nitrogen tank (20, 29) are formed as concentric containers of different sizes but substantially the same geometric shape.

6. The fuel cell system reaction gas container (1) according to any of claims 1 to 4,
wherein the hydrogen tank (10) and the oxygen tank (30) and, if applicable, the hydrogen tank (10) and the nitrogen tank (20, 29) are formed as concentric containers of different sizes and of different geometric shapes.

7. The fuel cell system reaction gas container (1) according to any of claims 1 to 6,
wherein the hydrogen tank (10) and/or the oxygen tank (30) and/or the nitrogen tank (20, 29) and/or the insulation (40) is/are provided with stiffeners.

8. The fuel cell system reaction gas container (1) according to any of claims 1 to 7,
wherein the nitrogen tank (20) is adapted to be pressurised, and the hydrogen tank (10) and/or the oxygen tank (30) is provided with a pressure sensor.

9. The fuel cell system reaction gas container (1) according to any of claims 1 to 8,
wherein the container has the shape of a rotational ellipsoid, in particular wherein the container has a length of 150 to 250 cm and a diameter of 35 to 45 cm, the hydrogen tank (20) is designed to hold 10 to 14 kg of liquid hydrogen, the oxygen tank (30) is designed to hold 5 to 7 kg of liquid oxygen, and optionally a nitrogen tank (20, 29) is provided that is designed to hold up to 1 kg of liquid or gaseous nitrogen.

10. The fuel cell system reaction gas container (1) according to any of claims 1 to 9,
wherein the hydrogen tank (10) and/or the oxygen tank (30) and/or, if applicable, the nitrogen tank (20, 29) is/are divided into two or more segments.

11. The fuel cell system reaction gas container (1) according to any of claims 1 to 10,
wherein the hydrogen tank (10), the oxygen tank (30) and, if applicable, the nitrogen tank (20, 29) have conduits for being filled with and for discharging gas, which are arranged concentrically in each other.

12. A fuel cell system (2) comprising at least one fuel cell (3) with an anode (4) and a cathode (5), and a reaction gas container,
**characterised in that** the reaction gas container is a reaction gas container (1) according to any of claims 1 to 11.

13. The fuel cell system (2) according to claim 12,
wherein the nitrogen tank is formed as a separate pressurized-gas tank (50).

14. A vehicle, such as a manned or unmanned underwater vehicle, with fuel cell drive,
**characterised in that** it comprises a fuel cell system (2) according to claim 12 or 13.

15. The vehicle according to claim 14,
**characterised in that** the outer configuration of the reaction gas container (1) is matched to the shape of the space provided in the vehicle for installation of the reaction gas container.

## Revendications

1. Récipient (1) d'un système de piles à combustible, destiné à un gaz réactif, présentant :
un réservoir de stockage d'hydrogène (10) pour la réception d'hydrogène liquide, un réservoir de stockage d'oxygène (30) pour la réception d'oxygène liquide, et de manière facultative, un réservoir de stockage d'azote (20, 29) pour la réception d'azote liquide ou gazeux ;
**caractérisé en ce que** le réservoir de stockage d'hydrogène (10) est situé au moins en partie à l'intérieur du réservoir de stockage d'oxygène (30), et **en ce que** le réservoir de stockage d'oxygène (30) est entouré au moins en partie d'une isolation (40).

2. Récipient (1) d'un système de piles à combustible, destiné à un gaz réactif selon la revendication 1, qui présente un réservoir de stockage d'azote (20) ; dans lequel le réservoir de stockage d'azote (20) est situé à l'intérieur du réservoir de stockage d'oxygène (30) et à l'extérieur du réservoir de stockage d'hydrogène (10).

3. Récipient (1) d'un système de piles à combustible, destiné à un gaz réactif selon la revendication 1 ou 2, qui présente un réservoir de stockage d'azote (20) ; dans lequel le réservoir de stockage d'hydrogène (10) est situé à l'intérieur du réservoir de stockage d'azote (20).

4. Récipient (1) d'un système de piles à combustible, destiné à un gaz réactif selon l'une quelconque des revendications 1 à 3, dans lequel l'isolation (40) est réalisée sous la forme d'un espace creux dans lequel on a fait le vide ou dans lequel on peut faire le vide.

5. Récipient (1) d'un système de piles à combustible, destiné à un gaz réactif selon l'une quelconque des revendications 1 à 4, dans lequel le réservoir de stockage d'hydrogène (10), le réservoir de stockage d'oxygène (30) et, le cas échéant, le réservoir de stockage d'azote (20, 29) sont réalisés sous la forme de récipients concentriques de différentes grandeurs, mais de configuration géométrique essentiellement identique.

6. Récipient (1) d'un système de piles à combustible, destiné à un gaz réactif selon l'une quelconque des revendications 1 à 4, dans lequel le réservoir de stockage d'hydrogène (10) et le réservoir de stockage d'oxygène (30) et, le cas échéant, le réservoir de stockage d'hydrogène (10) et le réservoir de stockage d'azote (20, 29) sont réalisés sous la forme de récipients concentriques de différentes grandeurs, mais de configuration géométrique essentiellement identique.

7. Récipient (1) d'un système de piles à combustible, destiné à un gaz réactif selon l'une quelconque des revendications 1 à 6, dans lequel le réservoir de stockage d'hydrogène (10) et/ou le réservoir de stockage d'oxygène (30) et/ou le réservoir de stockage d'azote (20, 29) et/ou l'isolation (40) est/sont équipé(s) de renforts.

8. Récipient (1) d'un système de piles à combustible, destiné à un gaz réactif selon l'une quelconque des revendications 1 à 7, dans lequel le réservoir de stockage d'azote (20) peut être mis sous pression, et le réservoir de stockage d'hydrogène (10) et/ou le réservoir de stockage d'oxygène (30) est/sont équipé(s) d'un capteur de pression.

9. Récipient (1) d'un système de piles à combustible, destiné à un gaz réactif selon l'une quelconque des revendications 1 à 8, dans lequel le récipient présente la configuration d'un ellipsoïde de révolution ; en particulier dans lequel le récipient présente une longueur de 150 à 250 cm et un diamètre de 35 à 45 cm ; le réservoir de stockage d'hydrogène (20) est conçu pour la réception de 10 à 14 kg d'hydrogène liquide ; le réservoir de stockage d'oxygène (30) est conçu pour la réception de 5 à 7 kg d'oxygène liquide ; et de manière facultative, un réservoir de stockage d'azote (20, 29) est conçu pour la réception d'une quantité d'azote liquide ou gazeux allant jusqu'à 1 kg.

10. Récipient (1) d'un système de piles à combustible, destiné à un gaz réactif selon l'une quelconque des revendications 1 à 9, dans lequel le réservoir de stockage d'hydrogène (10) et/ou le réservoir de stockage d'oxygène (30) et/ou, le cas échéant, le réservoir de stockage d'azote (20, 29) est/sont subdivisé(s) en deux segments ou plus.

11. Récipient (1) d'un système de piles à combustible, destiné à un gaz réactif selon l'une quelconque des revendications 1 à 10, dans lequel le réservoir de stockage d'hydrogène (10), le réservoir de stockage d'oxygène (30) et, le cas échéant, le réservoir de stockage d'azote (20, 29) présentent des conduites pour le remplissage avec du gaz et pour le prélèvement du gaz, qui sont les unes dans les autres en position concentrique.

12. Système de piles à combustible (2) présentant au moins une pile à combustible (3) comprenant une anode (4) et une cathode (5), et au moins un récipient destiné à un gaz réactif, **caractérisé en ce que** le récipient destiné à un gaz réactif représente un récipient (1) destiné à un gaz réactif selon l'une quelconque des revendications 1 à 11.

13. Système de piles à combustible (2) selon la revendication 12, dans lequel le réservoir de stockage d'azote est réalisé sous la forme d'un réservoir séparé (50) destiné à un gaz sous pression.

14. Véhicule, tel qu'un véhicule sous-marin habité ou non habité, du type à entraînement par pile à combustible, **caractérisé en ce qu'**il présente un système de piles à combustibles (2) selon la revendication 12 ou 13.

15. Véhicule selon la revendication 14, **caractérisé en ce que** la configuration externe du récipient (1) destiné à un gaz réactif est adaptée à la forme de l'espace prévu pour le montage du récipient destiné à un gaz de réaction, dans le véhicule.
